# EUROPEAN PATENT APPLICATION

(11) **EP 1 457 585 A1**
(43) Date of publication of application: **15.09.2004**
(21) Application number: 04251465.3
(22) Date of filing: 15.03.2004
(51) Int. Cl.: C23F 11/16, C23F 11/10, E21B 41/02, C23F 11/14, C10M 135/32

(54) **Method and compounds for inhibiting corrosion**

(30) Priority: 14.03.2003 GB 0305862
(71) Applicant: T R Oil Services Limited, Aberdeen AB21 0GL (GB)
(72) Inventor: Craddock, Henry Alfred, Kirriemuir, Angus DD8 4TD (GB)
(74) Representative: Murgitroyd, Ian G.

(57) **Abstract**

The use of a compound according to formula I, in particular, thiohydantoin, as a corrosion inhibitor or a corrosion inhibitor synergist. 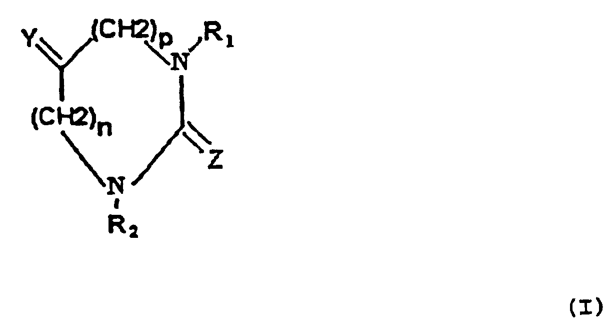 wherein n is any number between 1 and 10, p is any number between 0 and 10, R₁ is H or an organic group, R₂ is H or an organic group, and Y and Z are the same or different and each is an oxygen or sulphur atom.

## Description

This invention relates to a method and compounds for inhibiting corrosion in an aqueous environment and particularly but not exclusively to the use of small organo-sulfur molecules such as thiohydantoins as corrosion inhibitors or corrosion inhibitor synergists in the oil industry.

Advances in drilling and completion technology have revolutionised new field development and the use of subsea wells with long tie backs is now common. The low temperatures and long fluid transport times under subsea conditions often result in a wide variety of production chemistry related problems, including corrosion, scale, wax and asphaltene deposition, hydrate formation and bacterial growth.

A particular problem with corrosion is that it can sometimes occur preferentially at welded joints.

It is known that alkyl quaternary ammonium salts can be used as corrosion inhibitors and these are commercially available under the brand names such as Dodigen^{TM} and Dodicon^{TM}. It is thought that the molecules of these salts attach to the downhole metal structure - normally via a nitrogen atom present in the molecule - and through a process of self-assembly provide a physical barrier or film between water and the structure. This film prevents corrosion of the structure because the water (which includes corrosion causing agents such as CO₂ and H₂S) is prevented from contacting the structure. Also, the organic groups present in the inhibitors, being hydrophobic, repel water.

It is known that the addition of other compounds, known as synergists, can significantly increase the effectiveness of the corrosion inhibitors. The synergists are thought to help the inhibitors bond with the metal structure to provide a more effective physical barrier to water.

The corrosion rates for some alkyl quaternary ammonium salt corrosion inhibitors used with and without synergists are shown in the table below. It is shown from these results that although the ammonium salt and the synergist reduce the corrosion rate moderately when used independently of each other, when used together their combination reduces the corrosion rate significantly.

| compound | corrosion rate (thousands of an inch per year ("mpy") |
|---|---|
| blank | 32.87 mpy |
| 5ppm thiosulphate | 17.93 mpy |
| 20ppm Dodigen 2808 | 17.46 mpy |
| 20ppm Dodigen 2808+5ppm thiosulphate | 0.61 mpy |
| 20ppm Dodigen 179 | 27.40 mpy |
| 20ppm Dodigen 179+5ppm thiosulphate | 1.00 mpy |

Thioacetamide (CH₃CSNH₂) has been identified as a persistent corrosion inhibitor/corrosion inhibitor synergist and is commonly used as such. However, it is known as a possible carcinogen.

Sodium thiosulphate (STS) and thioglycolic acid (TGA) are also known corrosion inhibitors but suffer from the disadvantages that the former can promote pitting of stainless steels at high dose rates whilst the latter is a toxic and stench chemical.

Substituted thiohydantoins are used in the identification of the N-terminal amino acid units of a peptide chain by means of the Edman Degradation. A free amine function bonds to a phenyl isothiocyanate reagent and produces a thiohydantoin hetrocycle incorporating the N-terminal amino acid together with a shortened peptide chain. Characteristic hydantoin derivatives of all the amino acids have been catalogued so identification of the terminal units is accomplished by comparison.

Thiohydantoins are commercially available from Sigma-Aldridge and other chemical suppliers.

Thiohydantoin is not carcinogenic.

According to a first aspect of the present invention, there is provided a method of inhibiting corrosion in an aqueous environment, the method comprising the step of adding a compound according to the formula I into an aqueous environment, 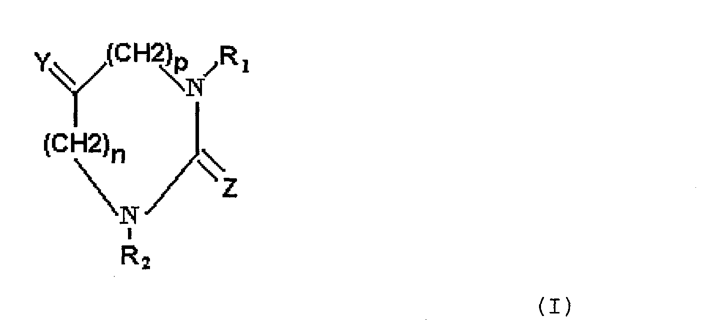 wherein n is any number between 1 and 10, p is any number between 0 and 10, R₁ is H or an organic group, R₂ is H or an organic group, and Y and Z are independently any suitable atom or functional group.

The compound may be injected.

The invention also provides a mixture of the compound defined by formula I and a carrier fluid. The carrier fluid may be water, glycol or oil. Preferably a mineral oil such as kerosene is used as the carrier fluid.

Preferably Y is an oxygen atom or a sulfur atom.
Preferably Z is a sulfur atom or alternatively an oxygen atom.

Preferably P is 0 or 1, more preferably 0.
Preferably n is 1 or 2, more preferably 1.

Preferably the ring of formula I is a 5 or 6 membered ring.

More preferably the compounds of the present invention are defined by formula 2 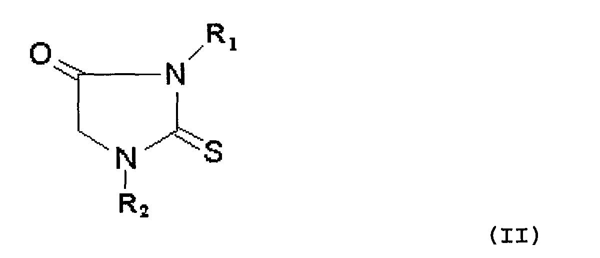 wherein R₁ and R₂ are independently H or an organic group.

Even more preferably, the compounds of the present invention are defined by formula III.

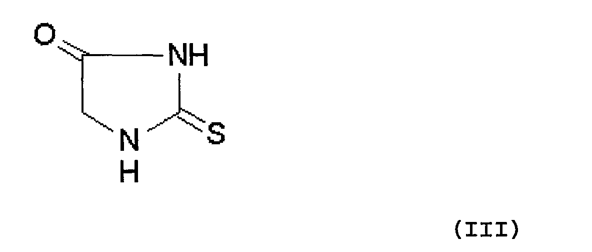

Preferably, the aqueous environment is part of an oilfield environment.

The aqueous environment may be any one of a cooling water system, a water flood system and a produced water system. The aqueous environment may also be in crude oil systems or gas systems and may be deployed downhole, topside, pipeline or during refining.

The aqueous environment may include CO₂, H₂S, O₂, brine, condensed water, crude oil, gas condensate, or any combination of the said or other species.

The compound may be deployed continuously or intermittently in a batch-wise manner. The compound may be used in low or high shear conditions.

The compound may be used as a corrosion inhibitor or as a corrosion inhibitor synergist in combination with an organic corrosion inhibitor.

Thus the invention also provides a mixture of a first and second compound, the mixture comprising a first compound as defined by formula I and the second compound comprising an oilfield corrosion inhibitor.

Examples of oilfield corrosion inhibitors for which synergists are useful include amines, amido amines, quatazamines, imidazolines, amides, ethoxylated amines, quaternary ammonium salts, betaines, phosphate esters, sulphonates, polyaspartates, fatty acids, glycols such as mono-, bi, and triethyleneglycol. Oligomers and polymers of these corrosion inhibitors may also be used with the compound.

The compounds of the present invention may also be used as part of a combined product, i.e. corrosion inhibitor combined with scale inhibitor, wax inhibitor, hydrate inhibitor, demulsifier, deoiler or any other corrosion inhibitor.

When used as a synergist, R₁ and R₂ are preferably organic groups such as alkyl groups. Preferably R₁ and R₂ comprise between 1 and 40 carbon atoms. Certain known synergists comprise carbon chains of around 18 carbon atoms thus R₁ and R₂ preferably have around 18 carbon atoms.

According to a further aspect of invention, there is provided a compound for use as a corrosion inhibitor as defined by formula I.

The invention also provides the use of a compound as defined by formula I as a corrosion inhibitor or as a corrosion inhibitor synergist.

The invention also provides a corrosion inhibitor or corrosion inhibitor synergist, comprising a compound as defined by formula I.

Embodiments of the invention will now be described by reference to the following examples.

In order to investigate the efficiency of corrosion inhibition by thiohydantoin, aqueous linear polarisation resistance (LPR) bubble tests were carried out and compared with thioacetamide. Thiohydantoin is not carcinogenic. As the basic structure of thiohydantoin is similar to imidazoline it was also compared against 2-methyl-2 imidazoline a similar sufur free imidazoline.

The structures of 2-thiohydantoin, thioacetamide and 2-methyl-2-imidazoline are shown below:-

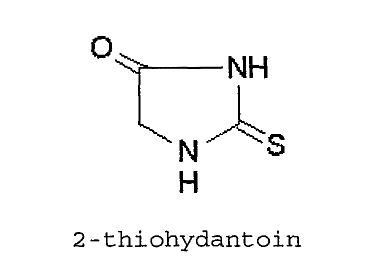

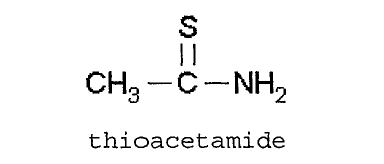

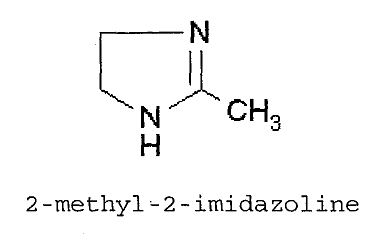

The procedure for conducting the bubble test is generally based on a protocol developed by BP Sunbury and described in "Corrosion Inhibitor Test Methods", S Webster, A J McMahon, D M E Paisley, D Harrop, BP Sunbury report ESR.94.ER.054, dated November 1996 and also "Corrosion Inhibitor Guidelines", A J McMahon, S Groves, BP Sunbury report ESR.95.ER.050, dated 1996.

The procedure also makes use of principles from the following ASTM standards,
- G1-90 (1999) "Standard Practise for Preparing, Cleaning and Evaluating Corrosion Test Specimens"
- G102-89 (1999) "Standard Practice for Calculation of Corrosion Rates and Related Information from Electrochemical Measurements"
- G5-94 (1999) "Test Method for Making Potentiostatic and Potentiodynamic Anodic Polarization Measurements"
- G59-97 "Standard Practice for Conducting Potentiodynamic Polarization Resistance Measurements"
- G61-86 (1998) "Standard Test Method for Conducting Cyclic Potentiodynamic Polarization Measurements for Localized Corrosion Susceptibility of Iron-, Nickel-, or Cobalt-Based Alloys".

The bubble test involves a carbon steel electrode immersed in a bath of oilfield brine, and possibly a crude oil, to simulate the environment in which the corrosion inhibitor would be used. A gas, commonly CO₂ which is a corrosion causing agent, is bubbled through the brine mixture and the corrosion rate of the electrode in the absence of a corrosion inhibitor is measured using the linear polarisation resistance method (LPR) or AC Impedance (EIS). The inhibitor under examination is then added, normally after two hours, and the subsequent polarisation resistance/ corrosion rate is recorded. This data can be used to calculate the inhibitor efficacy.

### Results

Aqueous bubble tests were carried out on the three inhibitors/synergists in duplicate.

**Table 1 :**

| **Aqueous Bubble Test Results using 3% NaCl at 50°C** | | | | |
|---|---|---|---|---|
| Inhibitor | Dose (ppm) | Corrosion Rate (mpy) | | % Inhibition |
| | | Before inhib. | After inhib. | |
| thioacetamide | 1 | 144.96 | 5.58 | 96.15 |
| thioacetamide | 1 | 152.60 | 3.55 | 97.67 |
| thiohydantoin | 1 | 163.47 | 18.07 | 88.95 |
| thiohydantoin | 1 | 141.09 | 9.42 | 93.32 |
| 2-methyl-2-imidazoline | 1 | 146.81 | 216.65 | 0 |
| 2-methyl-2-imidazoline | 1 | 144.07 | 193.81 | 0 |

In these tests the thiohydantoin did not perform as well as thioacetamide. Methyl imidazoline performed poorly as the corrosion rate actually increased, from 145mpy to 200mpy and therefore it was decided not to continue testing with this product.

The aqueous bubble tests were repeated using BP Forties synthetic brine and the results are shown in table 2. In this test the performances of thioacetamide and thiohydantoin had improved with a significant improvement in the result from thiohydantoin when compared to the bubble test with 3% NaCl. This is thought to be due to the presence of other trace ions in the Forties brine.

**Table 2 :**

| **Aqueous Bubble Test Results using Forties Synthetic Brine at 50°C** | | | | |
|---|---|---|---|---|
| Inhibitor | Dose (ppm) | Corrosion Rate (mpy) | | % Inhibition |
| | | Before inhib. | After inhib. | |
| Thioacetamide | 1 | 146.84 | 1.29 | 99.12 |
| Thioacetamide | 1 | 208.29 | 0.82 | 99.61 |
| Thiohydantoin | 1 | 174.73 | 1.64 | 99.06 |
| Thiohydantoin | 1 | 132.10 | 1.07 | 99.19 |

Partition bubble tests were performed on thioacetamide and thiohydantoin. In this test 600ml of brine is first added to a test cell. A mixture of a further 200 ml brine and 200 ml crude oil is made up and thoroughly mixed before being added to the brine in the test cell.

The fluids used in the partition bubble tests were Forties synthetic brine and Forties crude oil. 800ml of brine and 200ml of crude were used to investigate the partition efficiency of the inhibitors and the results are shown in table 3 below.

**Table 3 :**

| **Partition Bubble Test Results using Forties Synthetic Brine at 50°C** | | | | |
|---|---|---|---|---|
| Inhibitor | Dose (ppm) | Corrosion Rate (mpy) | | % Inhibition |
| | | Before inhib. | After inhib. | |
| Thioacetamide | 1 | 241.36 | 0.97 | 99.60 |
| Thioacetamide | 1 | 211.37 | 0.70 | 99.67 |
| Thiohydantoin | 1 | 239.59 | 2.41 | 98.99 |
| Thiohydantoin | 1 | 202.79 | 1.35 | 99.33 |

The performance of thioacetamide and thiohydantoin was similar to that achieved under aqueous Forties conditions. (Table 2) Thus, it can be seen that thiohydantoin gives effective corrosion inhibition in aqueous and partitioning bubble tests. The thiohydantoin offers similar or better performance than thioacetamide.

Thiohydantoin was evaluated further as a corrosion inhibitor and as a corrosion inhibitor synergist using a rotating cylinder electrode (RCE) test at 5000rpm (29.5 Pa). The rotating cylinder electrode test comprises a rotating carbon steel electrode immersed in a bath of oilfield brine and possibly crude oil to simulate the shear stresses that may be encountered in the environment which the corrosion inhibitor would be used. In certain tests, prepartitioning of the inhibitor is carried out with brine/crude shaken with inhibitor present and the separated brine used for the tests. A gas, commonly CO₂, is bubbled through the brine mixture and the electrode rotation started at the required rate. The corrosion rate of the brine is then measured using the linear polarisation resistance method and/or AC impedance. If unpartitioned brine is used the inhibitor being tested is added at this point and the inhibitor rate measured. If partitioned brine is used the initial rate is the inhibitor corrosion rate and is compared to partitioned brine without inhibitor to calculate the inhibition ratio. The results are shown in Table 4.

**Table 4 :**

| **Rotating Cylinder Electrode Test using 3%NaCl Brine at 50°C. (QUAT=quaternary ammonium salt.)** | | | | |
|---|---|---|---|---|
| Inhibitor | Dose (ppm) | Corrosion Rate (mpy) | | % Inhibition |
| | | Before inhib. | After inhib. | |
| thiohydantoin | 1 | 160.50 | 4.65 | 97.10 |
| thiohydantoin | 1 | 90.01 | 11.24 | 87.51 |
| thiohydantoin(lppm) + QUAT (2ppm) | 3 | 91.76 | 2.80 | 96.95 |
| thiohydantoin(1ppm) + QUAT (2ppm) | 3 | 90.06 | 5.59 | 93.79 |

Thus it can be seen that thiohydantoin, on its own, or in combination with a quaternary ammonium salt corrosion inhibitor gives effective corrosion inhibition in pre-partitioned shear conditions.

The quantity of thiohydantoin used in the formulation with the QUAT is the same as in previous tests. The QUAT is CLARIANT^{TM} Dodigen 2808, a coco benzyl quat.

A further RCE test was used to investigate the persistency of thiohydantoin. The brine was replaced with fresh brine after 20 hours. Although some persistency was observed the corrosion rate increased from 11mpy to 35 mpy and the results are shown in Table 5.

**Table 5 :**

| **Persistency Test using 3%NaCl Brine at 50°C** | | | | |
|---|---|---|---|---|
| Inhibitor | Dose (ppm) | Corrosion Rate (mpy) % Inhibition | | |
| | | Before inhib. | After inhib. | Fresh brine |
| Thiohydantoin | 1 | 90.01 | 11.25 | 35.45 |

Thus thiohydantoin offers some corrosion inhibtion when tested for film persistency.

In order to test the efficacy of thiohydantoin with respect to inhibiting weld corrosion, aqueous bubble tests were carried out using four 1% Nickel segmented weld electrodes on thiohydantoin and an amine based corrosion inhibitor. The whole weld is referred to in the art as a "weldment" and comprises the main part of the weld, Heat Affected Zones (HAZs) of the two parts being joined together on either side of the weld. On either side of these zones, the weldment comprises 'Parent' portions.

**Table 6**

| **Aqueous Bubble Test Results using Forties Synthetic brine at 50°C** | | | | | |
|---|---|---|---|---|---|
| I | | | Corrosion Rate | | |
| | Inhibitor | Dose (ppm) | Baseline (mpy) | Inhibited (mpy) | % Inhibition |
| Weld 3 | Thio-hydantoin | 1 | | | |
| Weld | | | 21.35 | 11.02 | 48.6 |
| HAZ 1 | | | 212.74 | 109.24 | 34.2 |
| HAZ 2 | | | 203.34 | 133.76 | 73.2 |
| Parent 1 | | | 221.84 | 59.36 | 77.2 |
| Parent 2 | | | 248.6 | 56.77 | 38.9 |
| Weld 4 | Thio-hydantoin /amine inhibitor | 1/20 | | | |
| Weld | | | 66.5 | 40.61 | 67.9 |
| HAZ 1 | | | 213.43 | 68.33 | 32.0 |
| HAZ 2 | | | 199.2 | 135.42 | 46.7 |
| Parent 1 | | | 29.46 | 15.68 | 46.6 |
| Parent 2 | | | 28.7 | 15.31 | 46.6 |

Thus it is shown from these results that thiohydantoin, particularly when mixed with an amine inhibitor has been shown to be inhibiting corrosion at weldments, which often corrode preferentially to other parts of a metal structure.

On the basis of these tests thiohydantoin is a viable and non-carcinogenic alternative to thioacetamide. Thiohydantoin matches the excellent corrosion inhibition of thioacetamide in a series of static and dynamic tests. Indeed, it is considered that thiohydantoin is suitable to be used as a corrosion inhibitor in its own right. In such cases, the hydrogens attached to the nitrogen atoms may be replaced by organic or alkyl groups of the order of C₁-C₄₀ but preferably around C₁₈.

A six membered ring equivalent such as a pyrimidine based ring is also effective against corrosion inhibition.

Thiohydantoin (and derivatives) are also effective against other known corrosion causing agents, such as H₂S.

Thus the present invention provides an easily available range of compounds for use as corrosion inhibitors or corrosion inhibitor synergists which have a similar efficacy to thioacetamide.

Modifications and variations may be made without departing from the scope of the invention.

## Claims

1. A method of inhibiting corrosion in an aqueous environment, the method comprising the step of adding a compound according to formula I into an aqueous environment, 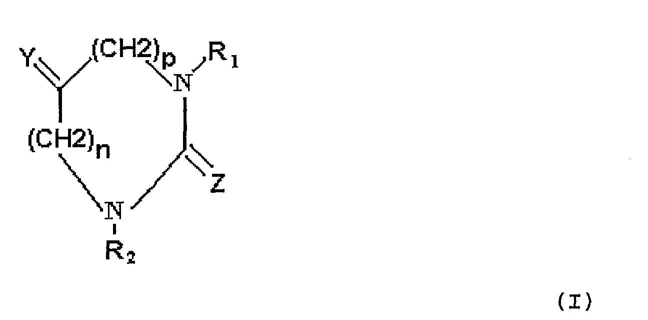 wherein n is any number between 1 and 10, p is any number between 0 and 10, R₁ is H or an organic group, R₂ is H or an organic group, and Y and Z are independently any suitable atom or functional group.

2. A method as claimed in claim 1, wherein Y is an oxygen atom.

3. A method as claimed in claim 1 or 2 , wherein Z is a sulfur atom.

4. A method as claimed in any preceding claim, wherein p is 0 or 1.

5. A method as claimed in any preceding claim, wherein n is 1 or 2.

6. A method as claimed in any preceding claim, wherein the compound of formula I is a compound according to formula II, 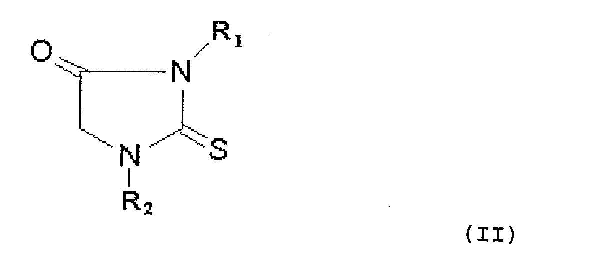 wherein R₁ and R₂ are independently H or an organic group.

7. A method as claimed in claim 6, wherein the compound according to formula II is a compound according to formula III.

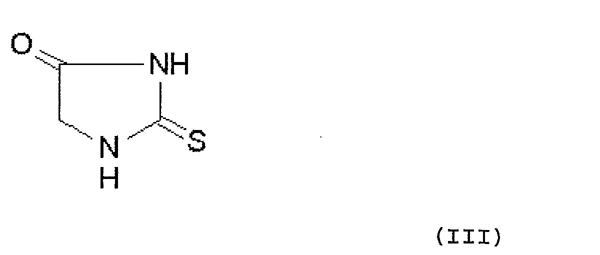

8. A method as claimed in any preceding claim, wherein the aqueous environment is part of an oilfield environment.

9. A method as claimed in any preceding claim, wherein the aqueous environment is one of a cooling water system, a water flood system, and a produced water system.

10. A method as claimed in any preceding claim, wherein the aqueous environment includes CO₂, H₂S, O₂, brine, condensed water, crude oil, gas condensate, or any combination of the said species.

11. A compound for use as a corrosion inhibitor, the compound having a formula as defined by formula I.

12. A compound for use as a corrosion inhibitor synergist, the compound having a formula defined by formula I.

13. A corrosion inhibitor comprising a compound as defined by formula I.

14. A mixture of a first and second compound, the mixture comprising a first compound as defined by formula I and the second compound comprising an oilfield corrosion inhibitor.

15. A mixture of compounds as claimed in claim 14, wherein the oilfield corrosion inhibitor is selected from the group consisting of amines, amido amines, quatazamines, imidazolines, amides, ethoxylated amines, glycols, quaternary ammonium salts, betaines, phosphate esters, sulphonates, wax inhibitor, fatty acids, polyaspartates and oligomers and polymers of said oilfield corrosion inhibitors.

16. A mixture of compounds as claimed in claim 14 or claim 15, further comprising a third compound selected from the group consisting of hydrate inhibitor, demulsifier and deoiler.

17. A mixture of the compound defined in formula I and a mineral oil.

18. A mixture as claimed in claim 17, wherein the mineral oil is kerosene.
